(19) **Europäisches Patentamt / European Patent Office / Office européen des brevets**

(11) **EP 1 632 019 B1**

(12) **FASCICULE DE BREVET EUROPEEN**

(45) Date de publication et mention
de la délivrance du brevet:
**20.10.2010 Bulletin 2010/42**

(21) Numéro de dépôt: **04767223.3**

(22) Date de dépôt: **01.06.2004**

(51) Int Cl.:
**H02P 9/08** *(2006.01)*      **F02N 11/00** *(2006.01)*

(86) Numéro de dépôt international:
**PCT/FR2004/001352**

(87) Numéro de publication internationale:
**WO 2005/109624 (17.11.2005 Gazette 2005/46)**

(54) **CIRCUIT DE COMMANDE A MODULATION EN LARGEUR D'IMPULSIONS POUR MACHINE ELECTRIQUE MULTI MODE ET MACHINE ELECTRIQUE MULTI MODE EQUIPEE D'UN TEL CIRCUIT DE COMMANDE**

STEUERGERÄT MIT PULSBREITENMODULATION FÜR EINE VIELSEITIGEINSETZBARE ELEKTRISCHE MASCHINE UND EINE VIELSEITIGEINSETZBARE ELEKTRISCHE MASCHINE AUSGESTTATET MIT EINEM SOLCHEN STEUERGERÄT

PULSE WIDTH MODULATION CONTROL CIRCUIT FOR MULTI-MODE ELECTRICAL MACHINE AND MULTIMODE ELECTRICAL MACHINE PROVIDED WITH SUCH A CONTROL CIRCUIT

(84) Etats contractants désignés:
**AT BE BG CH CY CZ DE DK EE ES FI FR GB GR HU IE IT LI LU MC NL PL PT RO SE SI SK TR**

(30) Priorité: **30.05.2003 FR 0306554**

(43) Date de publication de la demande:
**08.03.2006 Bulletin 2006/10**

(73) Titulaire: **VALEO EQUIPEMENTS ELECTRIQUES MOTEUR**
**94046 Créteil Cedex (FR)**

(72) Inventeurs:
• **ARMIROLI, Paul**
**F-94440 Marolles en Brie (FR)**

• **PLASSE, Cédric**
**F-94100 Saint-Maur (FR)**

(74) Mandataire: **Gamonal, Didier et al**
**Valeo Equipements Electriques Moteur**
**Propriété Industrielle**
**2 Rue André Boulle**
**94046 Créteil Cedex (FR)**

(56) Documents cités:
**EP-A- 0 660 501       EP-A- 0 901 930**
**EP-A- 1 219 493       FR-A- 2 745 445**
**FR-A- 2 802 363       US-A1- 2002 007 975**
**US-A1- 2003 034 755**

## Description

## DOMAINE DE L'INVENTION

La présente invention concerne un circuit de commande à Modulation en Largeur d'Impulsions (MLI) pour machine électrique tournante multi mode, telle que par exemple un alternateur-démarreur et une machine électrique multi mode équipée d'un tel circuit de commande.

## ETAT DE LA TECHNIQUE

La demande de brevet EP 1 219 493 décrit un générateur de puissance pour une voiture hybride comportant un moteur-alternateur et un circuit de contrôle pour contrôler un convertisseur AC/DC.

La demande de brevet US 2002/0007975 décrit un véhicule hybride utilisant un moteur et un moteur/ alternateur.

Il est apparu un besoin dans l'état de la technique qu'une même machine électrique multi modes puisse fonctionner successivement comme un démarreur du moteur thermique, comme un moteur, ou encore comme génératrice de courant continu pour recharger la batterie d'alimentation du réseau de bord, directement comme un alternateur de l'état de la technique, ou encore indirectement en coopérant dans un mode de fonctionnement du groupe motopropulseur permettant de récupérer l'énergie mécanique de freinage. Cependant, la conception électromécanique de la machine électrique favorise ou bien un fonctionnement en mode alternateur ou bien un fonctionnement en mode moteur optimisé en couple régulé. Il en résulte que le rendement global et les performances d'une machine électrique qui a été conçue pour fonctionner en génératrice de courant et qui travaille en mode moteur sera toujours inférieur au rendement global d'une machine électrique conçue pour fonctionner en moteur, et inversement.

Dans l'état de la technique, on a déjà proposé, notamment dans la demande FR-A-2.745.445 au nom du demandeur, d'utiliser un alternateur aussi comme un démarreur à l'aide d'un circuit convertisseur capable d'amener une pleine onde aux enroulements du stator de la machine électrique seulement lors d'une séquence de démarrage. Mais un tel circuit de commande ne peut délivrer assez de courant lorsque l'on veut travailler à vitesse de rotation réduite, par exemple lorsque la machine électrique doit travailler comme moteur d'assistance du groupe motopropulseur.

La présente invention apporte une solution au problème de la conception d'une machine unique permettant de fonctionner comme démarreur du moteur thermique, comme moteur électrique d'entraînement couplé au reste du groupe motopropulseur et aux roues d'entraînement du véhicule, dans un mode d'assistance ou d'augmentation (« boost ») du couple ou de la puissance motrice, ou encore comme génératrice électrique, fonctionnant en alternateur ou en récupération d'énergie mécanique de freinage.

Particulièrement, dans l'industrie automobile, la tension continue d'alimentation du réseau de bord peut différer selon les modèles. On connaît les alimentations en 6 volts, 12 volts, 24 V et même 48 volts. La conception électromécanique d'une machine électrique adaptée à fonctionner sur un quelconque réseau de bord impose des compromis qui modifient sa performance.

La présente invention apporte une solution au problème de l'adaptation d'une machine électrique pouvant fonctionner comme moteur ou génératrice sur un réseau d'alimentation continue de divers standards.

## OBJET DE L'INVENTION

Ce problème est résolu par un circuit de commande suivant la revendication 1.

Pour porter remède à ces inconvénients de l'état de la technique la présente invention propose un circuit de commande à modulation de largeur d'impulsion MLI pour machine électrique polyphasée destinée à être montée sur le groupe motopropulseur d'un véhicule, circuit du genre comportant :

- un pont hacheur connecté entre deux bornes d'alimentation continue et dont chaque borne commandée est destinée à être connectée à au moins une phase du stator de la machine électrique ;
- une pluralité de capteurs destinés à mesurer le courant et/ou la tension dans chaque phase de ladite machine électrique ;
- un moyen pour produire une information instantanée sur la position et la vitesse de rotation du rotor de la machine électrique ;
- un circuit de pilotage des branches du pont en fonction des mesures électriques dans les phases et/ou de la position et de la vitesse du rotor ;

Le circuit de commande de l'invention comporte aussi un circuit générateur de signaux de configuration du circuit de pilotage des branches du pont en fonction du mode désiré de fonctionnement de la machine électrique pris parmi les modes de fonctionnement comme démarreur, moteur électrique d'entraînement, moteur électrique d'assistance du moteur à combustion interne, alternateur ou alternateur de récupération d'énergie mécanique de freinage.

La présente invention concerne aussi une nouvelle machine électrique pour véhicule, pouvant fonctionner comme démarreur, moteur électrique d'entraînement, moteur électrique d'assistance du moteur à combustion interne, alternateur ou alternateur de récupération d'énergie mécanique de freinage et adaptée à fonctionner avec un circuit de commande selon l'invention. L'invention consiste en ce que la machine électrique comporte un stator bobiné dont le nombre de spires est calculé sur la base d'une énergie de magnétisation plus faible avec un nombre de spires au stator plus faible et en ce que pour les modes de fonctionnement demandant une énergie de magnétisation plus élevée on applique un contrôle en courant du stator au moyen du circuit de commande.

**BREVE DESCRIPTION DES DESSINS**

D'autres avantages et caractéristiques de la présente invention seront mieux compris à l'aide de la description et des dessins annexés parmi lesquels :

- la figure 1 est un schéma bloc représentant un mode de réalisation du circuit de l'invention ;
- la figure 2 est un schéma bloc représentant une partie du circuit de la figure 1 ;
- les figures 3 à 6 représentent des diagrammes définissant différents modes de commande du circuit de l'invention.

**DESCRIPTION DE MODES PREFERENTIELS DE REALISATION DE L'INVENTION**

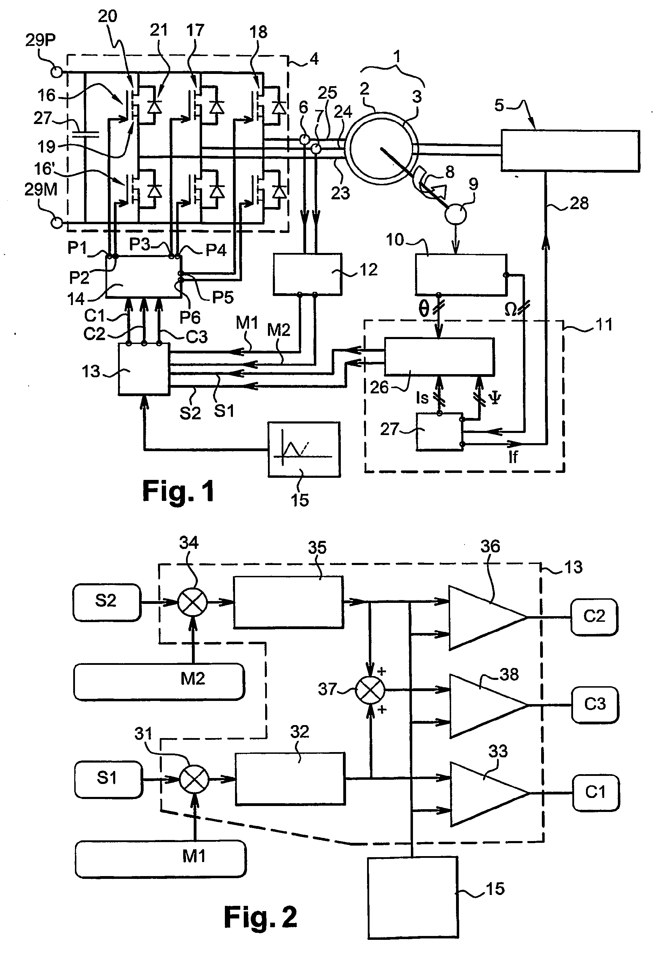

A la figure 1, on a représenté le schéma bloc d'un mode de réalisation particulier du circuit de l'invention. La machine électrique 1 comporte essentiellement un stator 2 équipé d'une pluralité d'enroulements de fils conducteurs, ou phases, selon des géométries de dispositions de bobines électriques qui permettent de concevoir ainsi qu'il est connu de l'homme de métier une machine électrique tournante particulière dotée d'un rotor 3 tournant à l'intérieur du stator.

Dans l'exemple de réalisation de la figure 1, le stator 2 est équipé de trois enroulements, non représentés, qui peuvent être montés avec un point commun (en étoile) ou qui sont connectés successivement les uns aux autres (en triangle), ou encore par des bobinages connectés en étoile triangle. Chaque point d'alimentation d'un enroulement du stator 2 est connecté à la borne commandée d'une branche 16, 17 ou 18 d'un pont 4. Le pont 4 est un élément essentiel du convertisseur de courant alternatif nécessaire pour alimenter la machine électrique en moteur, ou pour convertir le courant produit par elle quand elle fonctionne en génératrice (alternateur) en courant continu du fait de sa connexion au réseau de bord connecté à la batterie du véhicule par les bornes positive 29P et négative 29N.

Une branche de pont 4, comme la branche 16, est constituée de la mise en série de deux interrupteurs semi-conducteurs 16 et 16' dont les bornes de commande de mise en conduction sont connectées à des sorties de commande P1 et P2 d'un circuit de pilotage 14. Classiquement, un interrupteur semi-conducteur comme l'interrupteur 16 est composé d'un transistor de type MOS 20 dont le chemin de conduction entre les électrodes de drain et de source présente une diode antiparallèle 21 intrinsèque. L'électrode de commande de l'interrupteur semi-conducteur est constituée par l'électrode de grille du transistor 20. Selon les tensions appliquées à cette électrode de grille, l'interrupteur 16 est dans un état passant ou dans un état de forte impédance dans lequel aucun courant ne traverse le chemin direct du drain vers la source. Cependant, à cause du caractère fortement inductif des enroulements du stator 2, des tensions rapidement variables apparaissent entre les diverses polarités continues d'alimentation du pont 4 et la borne commandée de chaque branche du pont 4. C'est l'une des fonctions du circuit de pilotage 14 et de chaque diode intrinsèque comme la diode 21 de réduire l'effet d'engorgement de tensions de commutation. Les mesures mises en oeuvre dans le circuit de pilotage 14 ne seront pas plus décrit et sont à la portée de l'homme de métier.

De même, le rotor 3 de la machine électrique 1 est couplé par un moyen électrique à un circuit électronique actif 5 qui permet de découper la tension continue du réseau de bord de façon à fournir des tensions électriques variables de manière contrôlée de façon à produire un mode de fonctionnement en moteur ou en génératrice de la machine électrique 1. Un tel circuit de découpage est principalement réalisé autour d'un interrupteur semi-conducteur (non représenté), dont l'électrode de commande de mise en conduction est alternativement portée à un potentiel d'activation ou à un potentiel de repos de façon à produire une onde de fréquence et d'amplitude déterminées. Dans un mode de réalisation, le circuit 5 est combiné avec l'étage de puissance du circuit d'excitation du bobinage du rotor 3. Le circuit régulateur de cet étage de puissance peut être intégré dans le circuit 5.

Un arbre de rotation 8 est monté sur le rotor 3 de façon à transmettre le mouvement mécanique du rotor à un dispositif de couplage (non représenté) comportant un engrenage et/ou un dispositif à poulie et courroie qui sont couplés ainsi qu'il est connu de l'homme de métier au reste du groupe motopropulseur du véhicule, et particulièrement au vilebrequin du moteur thermique, notamment quand la machine électrique 1 fonctionne comme un démarreur ou comme un alternateur.

L'arbre de rotation 8 est couplé à un capteur de rotation 9 qui produit un signal représentatif de la rotation instantanée de rotation du rotor 8, signal qui est traité par un circuit 10 de détection de rotation. Le circuit 10 de détection de rotation produit un premier signal théta représentatif de l'angle de rotation instantanée du rotor par rapport à une position de référence. Le circuit 10 de détection de rotation produit un second signal oméga représentatif de la vitesse angulaire de rotation du rotor.

Les deux signaux produits par le circuit 10 de détection de rotation sont transmis à des entrées d'un circuit 11 qui produit d'une part un signal de commande de commutation par une ligne 28 à destination du circuit hacheur 5 et d'autre part une pluralité de signaux de référence à destination d'un circuit 13 générateur de signaux de pilotage à destination du pont d'alimentation 4 du stator 2 de la machine électrique 1.

Sur chacune des trois lignes d'alimentation des trois phases 23, 24 et 25 du stator 2 de la machine électrique 1 sont disposés des capteurs de courant, comme les capteurs 6 et 7, dont les signaux sont transmis à un circuit 12 de mise en forme et de mesure de courant dans les phases statoriques. Le circuit 12 de mise en forme et de mesure de courant dans les phases statoriques produit au moins deux signaux de mesure de courant statorique M1 et M2 qui sont transmis à des entrées convenables du circuit 13 générateur de signaux de pilotage. Selon un mode de réalisation, la somme des courants statoriques est nulle parce que le stator est électriquement équilibré. Dans le cas d'une machine à N phases statoriques, le circuit de commande de l'invention comporte N-1 capteurs de courant et produit N-1 signaux de référence. Dans d'autres modes de réalisation, la machine électrique n'est pas équilibrée et un capteur de courant est prévu pour chaque enroulement du stator.

Un circuit 15 générateur d'une onde de base est prévue dont une sortie est connectée à une borne d'entrée du circuit 13 générateur de signaux de pilotage. Dans un mode particulier de réalisation, l'onde de base est constituée par une onde de forme triangulaire, qui présente un premier front croissant à une première vitesse et un second front décroissant à une seconde vitesse. De manière préférée, la première vitesse est plus faible que la seconde vitesse. D'autres formes d'onde de base sont prévues dans la présente invention.

Le circuit 13 générateur de signaux de pilotage produit trois signaux de pilotage C1, C2 et C3 qui sont connectés à des entrées d'un circuit d'adaptation 14 essentiellement constitué par des amplificateurs qui permettent aux signaux de pilotage de commander par des signaux de mise en conduction P1 à P6 les grilles des différents interrupteurs semi-conducteurs du pont 4. et qui sont produits par :

- une borne de sortie d'un signal de commande P1 de mise en conduction de l'interrupteur semi-conducteur 16 du côté de tension élevée de la première branche du pont 4 associé au premier enroulement 23 du stator 2 de la machine électrique 1 ;
- une borne de sortie d'un signal de commande P3 de mise en conduction de l'interrupteur semi-conducteur 17 du côté de tension élevée de la seconde branche du pont 4 associé au second enroulement 24 du stator 2 de la machine électrique 1 ;
- une borne de sortie d'un signal de commande P5 de mise en conduction de l'interrupteur semi-conducteur 18 du côté de tension élevée de la troisième branche du pont 4 associé au troisième enroulement 25 du stator 2 de la machine électrique 1 et
- les trois bornes de sortie P2, P4 et P6 de commande de conduction des interrupteurs commandés comme l'interrupteur 16' de chacune des trois branches du pont qui permettent la connexion d'un enroulement à la ligne de masse par la borne 29N qui travaillent chacune selon la loi de commande appliquée à la borne P1 ou P3 ou P5 ainsi qu'il est connu.

On doit comprendre que, pour les trois interrupteurs disposés au point froid de chaque branche du pont 4, le circuit 14 génère des signaux correspondants sur le même principe. Particulièrement, ces signaux sont directement obtenus sur une borne de sortie complémentaire de chaque comparateur 33, 36 ou 38. Cette disposition permet aussi en fonction des corrections nécessaires dans les schémas de commutation du pont 4 d'ajouter des circuits ajoutant des retards dans les commutations en fonction de boucles de contrôle supplémentaires non représentés ici et de fournir une commande d'un niveau suffisant pour faire changer l'état de conduction de chaque interrupteur commandé à l'électrode de grille duquel la borne de sortie du circuit 14 est connectée.

A la figure 2, on a représenté un mode particulier de réalisation d'un circuit 13 générateur de signaux de pilotage selon l'invention. A la figure 2, les éléments analogues à ceux de la figure 1 portent les mêmes numéros de référence et ne sont pas plus décrits. Le circuit 13 présente cinq bornes d'entrée qui sont respectivement :

- une borne d'entrée d'un signal de référence S1 issu du circuit 11 ;
- une borne d'entrée d'un signal de mesure M1 issu du circuit de mesure de courant ;
- une borne d'entrée d'un signal de référence S2 issu du circuit 11 ;
- une borne d'entrée d'un signal de mesure M2 issu du circuit de mesure de courant ;
- une borne d'entrée du signal de pilotage issu du circuit 15 générateur de signal de pilotage.

Le circuit 13 présente trois bornes de sortie qui sont respectivement :

- une borne de sortie d'un signal de commande C1 destiné à commander la commutation de la première branche du pont 4 associée au premier bobinage statorique 23 ;
- une borne de sortie d'un signal de commande C2 destiné à commander la commutation de la seconde branche du pont 4 associée au second bobinage statorique 24 ;
- une borne de sortie d'un signal de commande C3 destiné à commander la commutation de la troisième branche du pont 4 associée au troisième bobinage statorique 25.

Le circuit 13 comporte un premier soustracteur 31 dont une première borne d'entrée positive est connectée à la borne d'entrée du premier signal de référence S1 et dont une seconde borne d'entrée négative est connectée à la borne d'entrée du premier signal de mesure. La borne de sortie du premier soustracteur 31 est connectée à une borne d'entrée d'un circuit de correction 32 qui applique une fonction de correction F1 () qui est présenté à la sortie du circuit de correction 32 sous la forme :

$$A1 = F1(S1 - M1).$$

Dans un mode particulier de réalisation, la fonction de correction F1() applique un facteur de type multiplicatif F1, prédéterminé et enregistré dans le circuit de correction selon les caractéristiques électrodynamiques de la machine électrique 1, selon la relation :

$$A1 = F1 \times (S1 - M1).$$

Le signal de sortie A1 (non représenté) issu du circuit de correction 32 est appliqué à une première borne d'entrée d'un comparateur 33 dont une seconde borne d'entrée de comparaison est connectée à la sortie du circuit 15 générateur du signal de pilotage, préférentiellement de forme triangulaire. La borne de sortie du comparateur 33 délivre un signal qui bascule d'un état inactif par exemple de 0 V, à un signal actif par exemple correspondant à la tension d'alimentation du comparateur pour faire changer l'état de conduction de l'interrupteur commandé 16 à l'électrode de grille duquel la borne de sortie du comparateur 33 est connectée.

Le circuit 13 comporte un second soustracteur 34 dont une première borne d'entrée positive est connectée à la borne d'entrée du second signal de référence S2 et dont une seconde borne d'entrée négative est connectée à la borne d'entrée du second signal de mesure M2. La borne de sortie du second soustracteur 34 est connectée à une borne d'entrée d'un circuit de correction 35 qui applique une fonction de correction F2() qui est présenté à la sortie du circuit de correction 35 sous la forme :

$$A2 = F2(S2 - M2).$$

Dans un mode particulier de réalisation, la fonction de correction F2() applique un facteur de type multiplicatif F2, prédéterminé est enregistrée dans le circuit de correction selon les caractéristiques électrodynamiques de la machine électrique 1, selon la relation :

$$A2 = F2 \times (S2 - M2).$$

Le signal de sortie A2 (non représenté) issu du circuit de correction 35 est appliqué à une première borne d'entrée d'un comparateur 36 dont une seconde borne d'entrée de comparaison est connectée à la sortie du circuit 15 générateur du signal de pilotage, préférentiellement de forme triangulaire. La borne de sortie du comparateur 36 délivre un signal qui bascule d'un état inactif par exemple de 0 V, à un signal actif par exemple correspondant à la tension d'alimentation du comparateur et d'un niveau suffisant pour faire changer l'état de conduction de l'interrupteur commandé 18 à l'électrode de grille duquel la borne de sortie du comparateur 36 est connectée.

Les bornes de sortie des deux circuits de correction 32 et 35 sont aussi connectées à des bornes d'entrées respectives d'un additionneur 37 dont la borne de sortie est appliquée à une première borne d'entrée d'un comparateur 38 dont une seconde borne d'entrée de comparaison est connectée à la sortie du circuit 15 générateur du signal de pilotage, préférentiellement de forme triangulaire. La borne de sortie du comparateur 38 délivre un signal qui bascule d'un état inactif par exemple de 0 V, à un signal actif par exemple correspondant à la tension d'alimentation du comparateur.

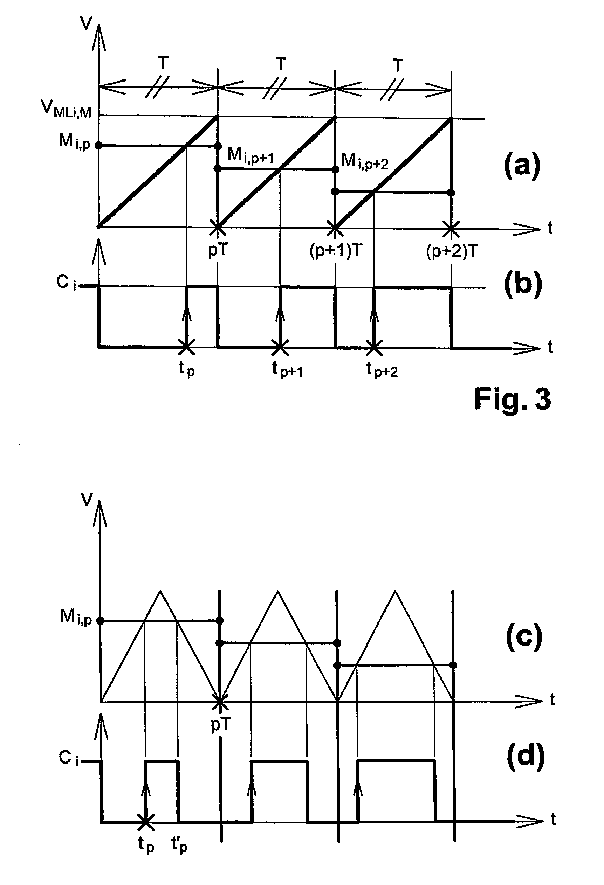

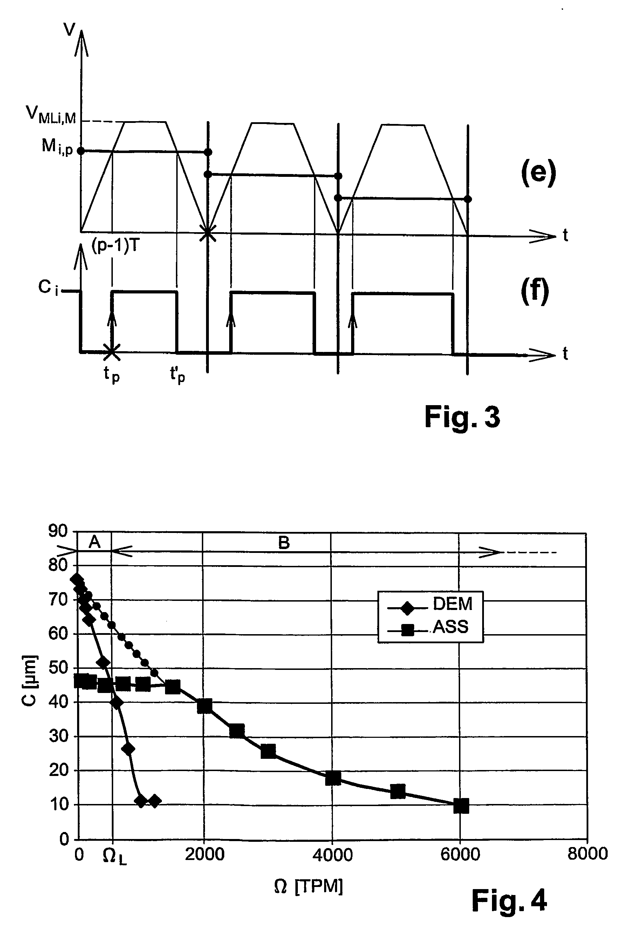

A la figure 3, on a représenté six diagrammes temporels (a) à (f) expliquant le fonctionnement du circuit 13 générateur des signaux de commande appliqués aux électrodes de commande du pont 4 à travers le circuit amplificateur 14. Pour l'une quelconque des phases i des enroulements statoriques, l'onde en dents de scie représentée à la figure 3(a) passe lentement d'une valeur nulle à une valeur VMLI, M maximale, puis redescend avec une vitesse aussi rapide que possible à la valeur nulle pendant une période T. Cette onde est connectée par l'intermédiaire du générateur 15 à la seconde borne d'entrée des comparateurs du circuit 13. L'onde en dents de scie est générée identiquement à elle-même sous une fréquence F = 1/T déterminée en fonction des caractéristiques électrodynamiques de la machine électrique.

Périodiquement, à chaque période T, soit successivement aux dates pT, (p+1)T, (p+2)T représentées en abscisses, le signal de différence, affecté le cas échéant de sa correction, soit :

$$Ai = Fi(Mi - Si)$$

est comparé pendant la durée de la période correspondante à l'onde triangulaire en cours d'augmentation. Quand les deux valeurs, soit la valeur V correspondant à la valeur instantanée de tension d'un l'onde triangulaire et la valeur Ai,p du signal de différence corrigée lors de la p-ième période, sont détectées égales par le comparateur aux bornes d'entrée desquels six valeurs sont appliquées, le comparateur place sa sortie à l'état actif, ce qui est représenté aux différents instants tp, tp+1 et tp+2. Puis, le comparateur repasse presque instantanément à l'état inactif pour la nouvelle période ainsi qu'il est représenté à la figure 3b.

Aux diagrammes (c) et (d), on a représenté un second mode de réalisation d'un signal de commande à l'aide d'une onde de référence sous forme d'une onde triangulaire dans laquelle, en fonction des pentes montante et descendante et du niveau maximal de référence VMLI, M il est possible de faire varier une date de début de conduction tp et une date de fin de conduction t'p à chaque période p de l'onde de référence. Quand le signal de mesure Mi,p devient supérieur au signal de référence le circuit 13 bascule une sortie Ci à une valeur active à la date tp et quand le signal de référence Mi,p redevient inférieur au signal de référence Si, le circuit 13 replace sa sortie Ci à l'état inactif à la date t'p.

Une telle forme d'onde réduit les harmoniques car les commutations entre phases ne sont plus simultanées.

Aux diagrammes (e) et (f), on a représenté un troisième mode de réalisation d'un signal de commande à l'aide d'une onde de référence sous forme d'une onde trapézoïdale dans laquelle, en fonction des pentes montante et descendante et du niveau maximal de référence VMLI, M il est possible de faire varier une date de début de conduction tp et une date de fin de conduction t'p à chaque période p de l'onde de référence selon le même mécanisme qu'aux diagrammes précités. Cependant, la partie à tension constante VMLI,i de chaque signal de référence Si assure que'une certaine durée de non changement d'état du pont 4 sera assurée ce qui évite certaines commutations anarchiques.

On réalise ainsi une modulation de largeur d'impulsion de fréquence déterminée qui peut être paramétrée lors de l'utilisation et de rapport cyclique variable en fonction du courant mesuré dans la phase ainsi que d'un signal de référence qui correspond au mode de fonctionnement de la machine électrique à la date de la comparaison effectuée dans le circuit 13.

À cet effet, le circuit 11 générateur de signaux de référence appliqués au circuit générateur 13 ainsi que du signal de commande 28 appliqué au circuit hacheur 5 d'alimentation des enroulements du rotor 3 comporte un moyen non représenté de détection du mode de fonctionnement de la machine électrique 1. Préférentiellement, le moyen de détection d'un mode de fonctionnement comporte un moyen de décodage d'une commande appliquée à la machine électrique à un ordinateur de bord décidant du fonctionnement parmi l'un des modes suivants :

- un mode de fonctionnement comme démarreur du moteur thermique ;
- un mode de fonctionnement comme alternateur pour recharger la batterie électrique connectée au réseau de bord d'alimentation en tension continue ;
- un mode de fonctionnement comme un moteur d'entraînement travaillant directement sur les roues du véhicule ou indirectement en venant additionner sa puissance mécanique fournie à la puissance mécanique fournit par le reste du groupe motopropulseur ;
- un mode de fonctionnement comme génératrice travaillant en récupération de l'énergie de freinage demandé par le groupe motopropulseur.

En pratique, une commande en couple positif ou négatif indique un mode alternateur ou moteur et la valeur fixe le niveau de puissance demandée. Dans un mode particulier de réalisation, une information intégrant une donnée comme la vitesse du véhicule est détecté sur le réseau de données circulant dans le véhicule comme un réseau CAN et est détectée par un module convenable connecté au bus CAN pour décoder ladite information autorisant ou non le passage en mode de démarreur du circuit de commande.

A chaque mode de fonctionnement de la machine électrique correspond notamment un programme différent de génération de signaux de référence S1, S2 et de signal de commande If du hacheur 5 qui permet d'assurer, en fonction des paramètres de construction électrique de la machine électrique, un fonctionnement optimal de la machine électrique 1 en termes de couple appliqué sur l'arbre du rotor et/ou de vitesse de rotation.

On va maintenant décrire les principes de construction d'une machine électrique adaptée au circuit de commande de l'invention.

La machine électrique doit travailler et être optimisée pour les quatre modes définis ci-dessus de sorte que l'on puisse augmenter le rendement et les performances dynamiques de la machine.

Le circuit de commande de la machine qui a été décrit ci-dessus permet d'effectuer un contrôle interne complet des paramètres de fonctionnement électrique de la machine. La puissance délivrée par la machine est seulement limitée par l'énergie électrique disponible sur le réseau de bord (batterie), l'état énergétique du moteur thermique et l'environnement du véhicule (couples résistants sur les roues du véhicule notamment).

Dans les modes de fonctionnement moteur, et parmi ceux-ci dans les fonctions d'assistance en couple, la machine électrique doit maintenir un niveau de puissance mécanique maximale sur une large gamme de vitesse de rotation de la machine électrique. Ainsi, le couple mécanique en mode moteur est nécessaire pour assister le moteur thermique, mais également à plus haute vitesse en mode assistance au moteur thermique et dans la zone où le couple maximum est nécessaire. Particulièrement, les paramètres de construction de la machine électrique vont dépendre du rapport de réduction appliqué par le dispositif de couplage de la machine électrique au reste du notre propulseur.

Le couple appliqué dépend directement du courant qui traverse le rotor If et du courant qui traverse le stator Ir. Selon l'invention, les équations qui permettent de déterminer le nombre ns de tours des bobines au stator sont déterminées par :

$$C = k \times If \times Is$$

$$k = k' \times ns$$

Ainsi, pour augmenter le couple disponible sur le rotor, il faut augmenter le courant dans le stator pour un nombre ns de tour des bobines au stator déterminé. Mais, pour une puissance dissipée déterminée, l'augmentation du courant statorique exige la réduction de la résistance de bobine en réduisant le nombre de tours et en augmentant la section conductrice des fils des enroulements du stator.

Dans le même temps, la réduction du nombre de tours ns des enroulements au stator entraîne une réduction de la valeur de la force électromotrice qui permet d'accepter un courant plus élevé dans les bobines au stator à cause de la relation :

$$E = k1 \times If \times Omega$$

dans laquelle k1 dépend du nombre ns de tours au stator. L'expression du couple C disponible au rotor est alors déterminée par la relation :

$$C = k \times If \times (Ub - e)/r$$

où Ub représente la tension entre les bornes 29P et 29N connectées au réseau de bord, e est la force électromotrice et r est la résistance au stator. La réduction du nombre de tours ns au stator entraîne une modification du circuit magnétique.

Dans le mode moteur, la réduction du nombre de tours ns au stator augmente la puissance aux vitesses élevées de rotation allant de 3000 à 7000 tours par minute pour des machines électriques classiquement utilisées pour un véhicule, mais cette réduction du nombre de spires diminue la puissance mécanique et donc le couple à basse vitesse inférieur à 1800 tours par minute ou le couple de démarrage est déterminé par la relation :

$$C = k \times ns \times If \times Is.$$

Dans ce cas aussi, il est possible de remédier à un tel inconvénient de structure de machine électrique en renforçant le courant dans le stator à l'aide du circuit de commande de l'invention ainsi qu'il a été décrit à l'aide des figures précédentes.

Dans le mode de fonctionnement en démarreur, le courant dans le stator est déterminé par la relation :

$$Is = (Ub - e)/r$$

Ce courant est important et imposé par la résistance très faible des enroulements du stator. De ce fait, un contrôle de l'alimentation du stator en onde pleine imposerait un échauffement trop important. Selon l'invention, le circuit 11 propose alors un programme permettant de travailler en onde modulée en largeur d'impulsions MLI limitant le courant à des valeurs acceptables.

Dans le mode de fonctionnement en alternateur, au-delà d'une vitesse de rotation déterminée, l'existence d'un faible nombre de tours ns au stator augmentera la puissance disponible au stator, mais réduira la force électromotrice à basse vitesse selon la relation :

$$e = k \times If \times ns \times Omega.$$

a) Cette force électromotrice n'est plus suffisante à faible vitesse et reste inférieure à la tension délivrée par la batterie et donc ne permet pas de créer de courant en mode alternateur.

b) Aux vitesses de rotation élevées, la faible force électromotrice e réduit la réaction d'induit ce qui augmente la puissance et le rendement.

Selon l'invention, une fois la machine électrique déterminée par ces paramètres principaux, le circuit de commande de l'invention permet de gérer trois paramètres pour contrôler le fonctionnement et le mode de fonctionnement de la machine électrique qui sont :

- Le courant d'excitation au rotor If ;
- Le courant au stator Is ; et
- La phase électrique au stator $\Psi$ qui est l'angle entre le courant dans la phase au stator et la tension et la tension dans la même phase au stator.

Le contrôle de ces trois paramètres permet d'obtenir des valeurs précises désirées de couple et de puissance mécanique. Le circuit de commande de l'invention limitera le courant demandé à la batterie particulièrement dans le mode de démarreur et maintiendra la tension de la batterie au-dessus de la moitié de sa valeur nominale. Dans ce cas, la batterie délivre sa puissance maximale.

Le couple positif maximum est obtenu quand la force électromotrice est en phase avec le courant imposé au stator sachant que sur l'ensemble de la gamme de fonctionnement de la machine électrique en mode moteur la phase électrique $\Psi$ au stator peut varier de 0 à 90 degrés d'angle. Selon les notations utilisées ici, une valeur positive de couple signifie que la machine transforme de la puissance électrique en puissance mécanique.

A la figure 4, on a représenté un diagramme de fonctionnement d'une machine électrique connectée à un circuit de commande selon l'invention, dont le circuit 11 générateur de signaux de référence comporte un programme pour son fonctionnement en mode moteur selon deux zones dénommées zone A et zone B. Dans le mode de fonctionnement en moteur, la séparation entre les deux zones est déterminée par une vitesse limite ΩL, par exemple de 1.500 tours par minute.

Le moyen pour générer des signaux de référence pour le contrôle de la modulation en largeur d'impulsions est donc programmé selon au moins deux modes moteurs :

Un mode de démarreur représenté typiquement par une courbe de genre DEM ;
Un mode d'aide au groupe motopropulseur représenté typiquement par une courbe de genre ASS.

En mode démarreur DEM, le circuit de commande de l'invention détermine une modulation en largeur d'impulsions qui présente un couple de sortie constant pour une vitesse de rotation W variant de la vitesse nulle à une vitesse limite, puis qui présente une décroissance à puissance constante jusqu'à une vitesse maximale.

En mode d'aide ASS, le circuit de commande de l'invention détermine une modulation en largeur d'impulsions qui présente un couple de sortie décroissant linéairement à partir d'une vitesse déterminée, dite vitesse de séparation ΩL entre deux zones A et B sur le graphique de la figure 4, vitesse correspondant avantageusement au ralenti du moteur thermique, jusqu'à environ 7.000 tours par minutes.

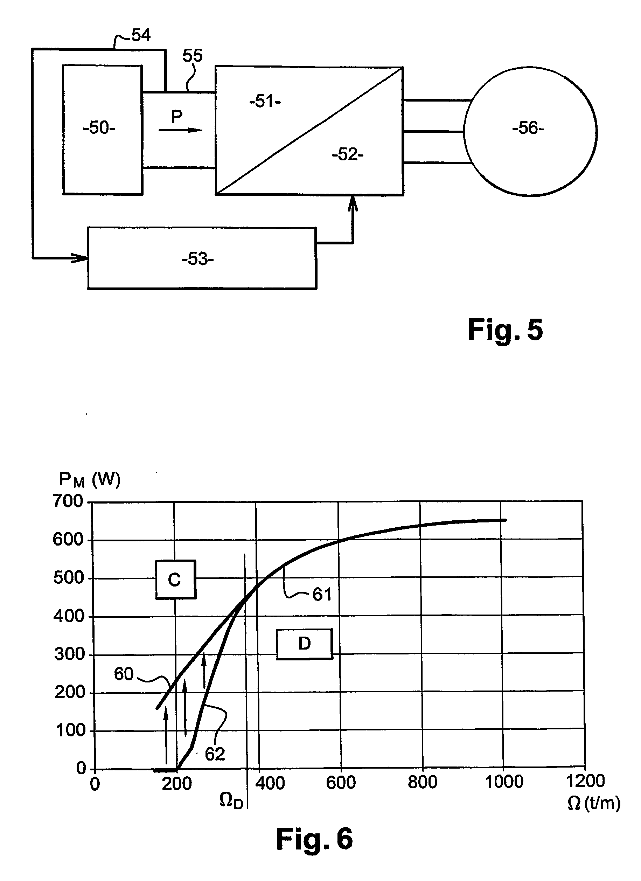

A la figure 5, on a représenté une configuration du circuit de commande de l'invention dans le mode de démarrage lorsque la machine commence à fonctionner en mode moteur qui comporte en plus un circuit 53 pour détecter quand la tension générée par la batterie 50 est supérieure à la moitié d'une valeur nominale U0 de fonctionnement de la batterie 50 avec une tension de garde ΔU prédéterminée.

Le circuit 53 de détection est connectée par une borne d'entrée à la ligne positive d'alimentation 55 entre la batterie 50 et la partie à courant continue du circuit de conversion utilisée dans le circuit de commande de l'invention et par une borne de sortie à une borne d'entrée de configuration du circuit de commande.

En mode alternateur, quand la force électromotrice ne permet pas de dépasser la tension sur le réseau de bord due à la faiblesse relative du nombre de spires au stator et à la faible vitesse, le circuit de commande est programmé pour générer une surtension de compensation dans les enroulements pour dépasser la tension batterie et permettre ainsi à l'alternateur de débiter du courant. Le moyen pour commander la modulation en largeurs d'impulsion comporte un moyen pour produire des signaux de référence pour le contrôle du stator qui exploite comme arguments d'entrée le courant dans chaque phase du stator, le courant d'excitation dans le rotor et l'angle électrique dans chaque phase du stator.

Dans un mode particulier de réalisation, le moyen pour produire des signaux de référence pour le contrôle du stator comporte aussi un moyen pour recevoir une commande de configuration de charge, qui peut être fournie par un ordinateur de contrôle du groupe motopropulseur et/ou du véhicule complet pour déterminer si l'alternateur doit travailler à pleine charge ou à charge réduite.

Dans un mode particulier de réalisation, le moyen pour produire des signaux de référence pour le contrôle du stator comporte aussi un moyen pour placer le circuit de commande 13 dans un état tel que le pont 4 produise une onde sinusoïdale présentant une avance de phase Ψ comprise entre 90 et 180° d'angle.

A la figure 6, on a représenté une diagramme de la puissance électrique disponible aux bornes 29P et 29N du circuit convertisseur chargé par le stator 2 de la machine électrique 1 quand elle fonctionne dans un mode de génératrice, alternateur ou récupération d'énergie de freinage. Le circuit de commande de l'invention détermine par un moyen d'enregistrement d'une valeur limite ΩD de la vitesse de rotation du rotor deux zones de fonctionnement en vitesses : une zone C pour les vitesses inférieures à la vitesse limite ΩD et une zone D pour les vitesses supérieures à ΩD. La vitesse limite est déterminée par le régime commun lorsque la machine travaille en modulation de largeur d'impulsions (partie de courbe 60) et lorsqu'elle travaille en redressement passif ou synchrone avec des diodes intrinsèques seulement (partie de courbe 62).

Le circuit de commande de l'invention comporte aussi un moyen pour faire travailler le circuit de conversion ou bien dans un régime en modulation de largeur d'impulsions pour les régimes inférieur à ΩD et seulement en redressement par diodes pour les régimes supérieurs.

En se reportant à nouveau à la figure 1, le moyen 11 pour générer les signaux de référence S1 et S2 pour le contrôle du stator et le signal de commande If du courant rotorique a été représenté dans un mode particulier de réalisation dans lequel un circuit 27 comporte une mémoire de données dotée d'un moyen pour générer des séquences de données en fonction d'un argument basé sur la vitesse de rotation instantanée du rotor et du mode de fonctionnement choisie de la machine électrique. Particulièrement, un tel circuit peut être programmé selon les transformées de Clarke et de Park pour déterminer le triplet de paramètres {Ip, If, ψ} qui décrit l'état électrique du stator et du rotor dans divers repères tournants avec la vitesse de rotation instantanée du rotor élaborée par la borne de sortie correspondante du circuit 10. Le triplet {Ip, If, ψ} est alors transformé en un triplet {Is, Ir, ψ} pour une commande analogique ou en un triplet {Id, Iq, Ir} pour une commande numérique. A cet effet, le circuit 27 comporte un port d'entrée d'une donnée instantanée de vitesse de rotation du rotor qui est connecté à une borne de sortie convenable du circuit 10 et il produit un signal de commande représentatif du courant dans le stator : Is, une indication de l'angle électrique représentatif de l'état relatif du stator par rapport au rotor et un signal de commande If représentatif de l'excitation au rotor.

Ce dernier signal If est transmis au circuit 5 de commande de l'excitation au rotor. Les deux premiers signaux Is et Ψ sont transmis à deux premières portes d'entrée d'un circuit 26 dont une troisième porte est connectée à la sortie correspondante du circuit 10 qui élabore un signal représentatif de l'angle instantané de rotation du rotor θ.

Le circuit 26 comporte un moyen pour produire une pluralité de signaux de référence S1, S2, ... pour déterminer la modulation en largeur d'impulsion à l'aide de l'onde de découpage produite par le circuit 15 ainsi qu'il a été décrit précédemment, modulation qui permet de construire une onde sinusoïdale complète, une onde sinusoïdale partielle, une onde en relation angulaire déterminée pour chaque phase des enroulements du stator en réponse au triplet de commande appliqué aux trois portes d'entrée du circuit 26. Le circuit comporte donc des moyens pour générer des signaux de référence selon la relation courante définie par :

$$Si = Si(Is,\ Ir,\ \psi)$$

Où Si() est une fonction prédéterminée qui est dans un premier mode de réalisation réalisée sous forme d'un programme exécuté par un circuit de traitement de signal de genre DSP (Digital Signal Processing de type Harvard). Dans un second mode de réalisation, le signal de référence courant Si() est généré par un séquenceur qui adresse, en fonction du triplet d'arguments (Is, Ψ, IR), une table de valeurs numériques représentant une cartographie déterminé par avance lors du chargement du circuit de commande de l'invention.

La machine électrique peut être une machine à rotor à griffes de type Lundel ou à pôles saillants, une machine à aimants permanents au rotor (auquel cas, le circuit 5 et le signal If ne sont pas concernés) une machine à induction ou à réluctance variable, une machine à griffes à aimants interpolaires, une machine à rotor hybride réalisé en tôles feuilletés et à pôles lisses avec bobinage d'excitation et des aimants permanents.

Le circuit de commande à modulation de largeur d'impulsions de l'invention permet de commander la machine électrique dans toute la gamme des vitesses de rotation du rotor. Il coopère séparément ou en combinaison avec :

- un moyen pour empêcher le calage du moteur thermique;
- un moyen de régulation de la vitesse du véhicule dans le mode de démarrage,

- un moyen de régulation de la puissance électrique disponible sur le réseau de bord du véhicule sur lequel la machine électrique et le circuit de commande de l'invention sont montés;
- un moyen de régulation de la puissance mécanique du groupe motopropulseur du véhicule sur lequel la machine électrique et le circuit de commande de l'invention sont montés ;
- un moyen de lissage des écarts de décélération et d'arrêt du véhicule sur lequel la machine électrique et le circuit de commande de l'invention sont montés ;
- un moyen de lissage des variations de couple demandé au groupe motopropulseur du véhicule sur lequel la machine électrique et le circuit de commande de l'invention sont montés ;
- un moyen pour adapter le courant dans les phases de la machine électrique en fonction d'au moins l'état de charge de la batterie du véhicule, du niveau d'énergie thermique et de tout autre paramètre de mesure de l'environnement du véhicule.

On remarque que le contrôle apporté par l'invention assure un comportement dynamique rapide de la machine, une réduction du bruit magnétique de la machine électrique dans tous ses modes de fonctionnement, une réduction des émissions radiofréquences EMC, particulièrement en fonction de la résolution d'un compromis entre les pertes et la vitesse de commutation des interrupteurs commandés utilisés dans le circuit convertisseur.

On remarque que le circuit de commande de l'invention assure la production de courant sur toute la gamme de fonctionnement en vitesses en mode génératrice même à basses vitesses de rotation.

On remarque que le circuit de commande de l'invention assure le démarrage et l'assistance dans les modes DEM et ASS même à des vitesses élevées de rotation de l'ordre de 7.000 tours par minute.

L'ensemble de ces avantages est rendu possible même avec une machine électrique présentant un nombre réduit de tours aux enroulements au stator ce qui assure une réduction des pertes résistives de puissance.

La forme d'onde triangulaire peut être variée notamment au niveau des pentes de ses fronts montant et descendant. Elle peut être remplacée par une forme d'onde trapézoïdale ou encore avec un contrôle vectoriel de type FOC. La forme d'onde peut aussi être combinée avec un moyen pour produire un effet d'hystérésis sur les fronts d'ondes. Un tel moyen pour produire un effet d'hystérésis sur les fronts d'ondes produit une avance temporelle lors de l'activation d'un front d'ondes et/ou un retard temporel lors de la désactivation d'un front d'ondes.

**Revendications**

1. Circuit de commande à modulation de largues d'impulsion MLI pour machine électrique tournante multi mode (1) équipée d'un stator (2) polyphasé et d'un rotor bobiné (3), comportant :

  - un circuit convertisseur de courant alternatif-continu réversible (4) connecté entre deux bornes d'alimentation continue (29P, 29N) et doté de bornes commandées (23 - 25), chaque borne commandée (23 - 25) étant destinée à être connectée à au moins une phase du stator (2) de ladite machine (1) ;
  - une pluralité de capteurs (6, 7) destinés à mesurer le courant et/ou la tension dans chaque phase de ladite machine (1);
  - un moyen (9, 10) pour produire une information instantanée sur la position et la vitesse de rotation du rotor (3) de ladite machine (1);
  - un circuit de pilotage (14) des branches du circuit convertisseur de courant alternatif-continu (4) en fonction des mesures électriques dans les phases et de la position et de la vitesse du rotor ;

  **caractérisé en ce qu'**il comporte aussi un circuit (11) qui produit d'une part un signal de commande de commutation par une ligne (28) à destination d'un circuit hacheur (5) connecté à l'excitation du rotor (3) et d'autre part une pluralité de signaux de référence à destination d'un circuit (13) générateur de signaux de pilotage à destination du pont d'alimentation (4) du stator (2) de la machine électrique (1) en fonction du mode désiré de fonctionnement de la machine électrique tournante pris parmi les modes de fonctionnement comme démarreur, moteur électrique d'entraînement, moteur électrique de renfort, alternateur ou alternateur de récupération d'énergie mécanique de freinage.

2. Circuit selon la revendication 1, **caractérisé en ce que** le circuit (10) de détection de rotation produit un premier signal (θ) représentatif de l'angle de rotation instantanée du rotor par rapport à une position de référence et un second signal (ω) représentatif de la vitesse angulaire de rotation du rotor.

3. Circuits selon la revendication 1 ou 2, **caractérisé en ce qu'**il comporte aussi un circuit (15) générateur d'une onde de base connectée à une borne d'entrée du circuit (13) générateur de signaux de pilotage.

4. Circuit selon la revendication 3, **caractérisé en ce que** l'onde de base est constituée par une onde de forme triangulaire, qui présente un premier front croissant à une première vitesse et un second front décroissant à une seconde vitesse.

5. Circuit selon la revendication 4, **caractérisé en ce que** le circuit (13) générateur de signaux de pilotage produit une pluralité de signaux de pilotage (C1, C2 et C3) qui sont connectés à des entrées d'un circuit d'adaptation (14) pour produire des signaux de mise en conduction (P1 à P6) des grilles des différents Interrupteurs semi-conducteurs du pont (4).

6. Circuit selon la revendication 5, **caractérisé en ce que** le circuit (13) comporte pour au moins une partie des phases du stator un soustracteur (31, 34) dont une première borne d'entrée positive est connectée à la borne d'entrée d'un des dits signaux de référence (S1, S2) et dont une seconde borne d'entrée négative est connectée à la borne d'entrée d'un des dits signaux de mesure (M1, M2), et dont la borne de sortie est connectée à une borne d'entrée d'un circuit de correction (32, 35) qui applique une fonction de correction F1 () ou F2() qui est présenté à la sortie du circuit de correction (32) sous la forme :

$$A1 = F1(S1 - M1).$$

7. Circuit selon la revendication 6, **caractérisé en ce que** le signal de sortie (A1) issu du circuit de correction (35) est appliqué à une première borne d'entrée d'un comparateur (33, 36) dont une seconde borne d'entrée de comparaison est connectée à la sortie du circuit (15) générateur du signal de pilotage et qui permet de faire changer l'état de conduction de l'interrupteur commandé (16, 17) à l'électrode de grille duquel la borne de sortie du comparateur (33, 36) est connectée.

8. Circuit selon la revendication 6, **caractérisé en ce que** les bornes de sortie des deux circuits de correction (32, 35) sont aussi connectées à des bornes d'entrées respectives d'un additionneur (37) dont la borne de sortie est appliquée à une première borne d'entrée d'un comparateur (38) dont une seconde borne d'entrée de comparaison est connectée à la sortie du circuit (15) générateur du signal de pilotage, et **en ce que** la borne de sortie du comparateur (38) délivre un signal pour faire changer l'état de conduction de l'interrupteur commandé (18) à l'électrode de grille duquel la borne de sortie du comparateur (38) est connectée.

9. Circuit selon l'une quelconque des revendications précédentes, **caractérisé en ce qu'**il coopère avec un moyen de détection d'un mode de fonctionnement comme un moyen de décodage d'une commande appliquée à la machine électrique à un ordinateur de bord décidant du fonctionnement parmi l'un des modes suivants :

- un mode de fonctionnement comme démarreur du moteur thermique ;
- un mode de fonctionnement comme alternateur pour recharger la batterie électrique connectée au réseau de bord d'alimentation en tension continue ;
- un mode de fonctionnement comme un moteur d'entraînement travaillant directement sur les roues du véhicule ou indirectement en venant mélanger sa puissance mécanique fournie à la puissance mécanique fournit par le reste du groupe motopropulseur ;
- un mode de fonctionnement comme génératrice travaillant en récupération de l'énergie de freinage demandé par le groupe motopropulseur.

10. Circuit selon l'une quelconque des revendications précédentes, **caractérisé en ce que**, dans un des modes de moteur, pour augmenter le couple disponible sur le rotor il comporte un moyen pour augmenter le courant dans le stator pour un nombre ns de tour des bobines au stator déterminé et un moyen pour renforcer le courant dans le stator lorsque la vitesse de rotation du rotor est élevé.

11. Circuit selon l'une quelconque des revendications précédentes, **caractérisé en ce que**, dans un des modes de fonctionnement en alternateur :

(a) pour pouvoir débiter un courant au réseau en créant une force électromotrice e supérieure à la tension de la batterie pour des vitesses faibles jusqu'à une vitesse suffisante pour passer en mode de redressement à diodes ;
(b) au-delà d'une vitesse de rotation déterminée,

il comporte un moyen pour limiter le courant demandé à la batterie.

12. Circuit selon l'une quelconque des revendications précédentes, **caractérisé en ce que** le circuit (11) générateur de signaux de référence comporte un programme pour son fonctionnement en mode moteur selon deux zones (zone A et zone B) déterminée par une vitesse limite (ΩL).

13. Circuit selon la revendication 12, **caractérisé en ce que**, en mode de démarreur DEM, il comporte un moyen pour déterminer une modulation en largeur d'impulsions qui présente un couple de sortie constant pour une vitesse de rotation W variant de la vitesse nulle à une vitesse limite, puis qui présente une décroissance à puissance constante jusqu'à une vitesse maximale.

14. Circuit selon la revendication 12, **caractérisé en ce**

**que**, en mode d'aide ASS, il comporte un moyen pour déterminer une modulation en largeur d'impulsions qui présente un couple de sortie décroissant linéairement à partir d'une vitesse déterminée de séparation (ΩL) entre des zones (A et B) correspondant avantageusement au ralenti du moteur thermique jusqu'à environ 7.000 tours par minutes.

15. Circuit selon la revendication 12, **caractérisé en ce que** lorsque la machine commence à fonctionner en mode moteur il comporte un circuit supplémentaire (53) pour détecter quand la tension générée par la batterie (50) est supérieure à la moitié d'une valeur nominale U0 de fonctionnement de la batterie (50) avec une tension de garde ΔU prédéterminée.

16. Circuit selon l'une quelconque des revendications précédentes, **caractérisé en ce que** le moyen pour produire des signaux de référence pour le contrôle du stator comporte aussi un moyen pour recevoir une commande de configuration de charge, qui peut être fournie par un ordinateur de contrôle du groupe motopropulseur et/ou du véhicule complet pour déterminer si la machine doit travailler à pleine charge ou à charge réduite.

17. Circuit selon l'une quelconque des revendications précédentes, **caractérisé en ce que** le moyen pour produire des signaux de référence pour le contrôle du stator comporte aussi un moyen pour placer le circuit de commande 13 dans un état tel que le pont 4 produise une onde sinusoïdale présentant une avance de phase comprise entre 90 et 180° d'angle en mode alternateur.

18. Circuit selon l'une quelconque des revendications précédentes, **caractérisé en ce que**, en mode alternateur, il comporte un moyen pour déterminer par un moyen d'enregistrement d'une valeur limite ΩD de la vitesse de rotation du rotor deux zones de fonctionnement en vitesses : une zone C pour les vitesses inférieures à la vitesse limite ΩD et une zone D pour les vitesses supérieures à ΩD, la vitesse limite étant déterminée par le régime commun lorsque la machine travaille en modulation de largeur d'impulsions (partie de courbe 60) et lorsqu'elle travaille en redressement passif avec des diodes intrinsèques seulement (partie de courbe 62).

19. Circuit selon l'une quelconque des revendications précédentes, **caractérisé en ce que**, en mode alternateur, il comporte un moyen pour faire travailler le circuit de conversion ou bien dans un régime en modulation de largeur d'impulsions pour les régimes inférieurs à ΩD ou bien seulement en redressement par diodes pour les régimes supérieurs à ΩD.

20. Circuit selon l'une quelconque des revendications précédentes, **caractérisé en ce que** le moyen (11) pour générer les signaux de référence (S1 et S2) pour le contrôle du stator et/ou le signal de commande (If) du courant rotorique comporte un circuit (27) qui comporte une mémoire de données dotée d'un moyen pour générer des séquences de données en fonction d'un argument basé sur la vitesse de rotation instantanée du rotor et du mode de fonctionnement choisie de la machine électrique.

21. Circuit selon la revendication 20, **caractérisé en ce que** le circuit (27) à mémoire est programmé selon les transformées de Clarke et de Park pour déterminer le triplet de paramètres {Is, IR, ψ} qui décrit l'état électrique du stator et du rotor dans divers repères tournants avec la vitesse de rotation instantanée du rotor élaborée par la borne de sortie correspondante du circuit (10).

22. Circuit selon la revendication 21, **caractérisé en ce que** les signaux représentatifs du courant au stator et de l'angle électrique (Is et Ψ) sont transmis à deux premières portes d'entrée d'un circuit (26) dont une troisième porte est connectée à la sortie correspondante du circuit 10 qui élabore un signal représentatif de l'angle instantané de rotation du rotor (θ) et **en ce que** le circuit (26) comporte un moyen pour produire une pluralité de signaux de référence (S1, S2, ...) pour déterminer la modulation en largeur d'impulsion à l'aide de l'onde de découpage produite par le circuit 15.

23. Circuit selon la revendication 22, **caractérisé en ce que** le circuit (26) pour produire des signaux de référence comporte des moyens pour générer des signaux de référence selon la relation courante définie par :

$$Si = Si(Is, \Psi, IR)$$

où Si() est une fonction prédéterminée.

24. Circuit selon la revendication 22, **caractérisé en ce que** le circuit (26) pour produire des signaux de référence comporte des moyens réalisés sous forme d'un programme exécuté par un circuit de traitement de signal de genre DSP (Digital Signal Processing de type Harvard).

25. Circuit selon la revendication 22, **caractérisé en ce que** le circuit (26) pour produire des signaux de référence comporte des moyens pour générer le signal de référence courant Si()par un séquenceur qui adresse, en fonction du triplet d'arguments (Is, Ψ, IR), une table de valeurs numériques représentant une cartographie déterminé par avance lors du chargement du circuit de commande.

26. Circuit selon l'une quelconque des revendications précédentes, **caractérisé en ce que** la machine électrique peut être une machine à rotor à griffes de type Lundell, à pôles saillants, une machine à aimants permanents au rotor une machine à induction ou à réluctance variable, une machine à griffes à aimants interpolaires ou une machine à rotor hybride réalisé en tôles feuilletés et à pôles lisses avec bobinage d'excitation et des aimants permanents.

27. Circuit selon l'une quelconque des revendications précédentes, **caractérisé en ce qu'**il comporte des moyens pour commander la machine électrique dans toute la gamme des vitesses de rotation du rotor.

28. Circuit selon l'une quelconque des revendications précédentes, **caractérisé en ce qu'**il coopère séparément ou en combinaison avec :

- un moyen pour empêcher le calage du moteur thermique ;
- un moyen de régulation de la vitesse du véhicule dans le mode de démarrage,
- un moyen de régulation de la puissance électrique disponible sur le réseau de bord du véhicule sur lequel la machine électrique et le circuit de commande de l'invention sont montés ;
- un moyen de régulation de la puissance mécanique du groupe motopropulseur du véhicule sur lequel la machine électrique et le circuit de commande de l'invention sont montés ;
- un moyen de lissage des écarts de décélération et d'arrêt du véhicule sur lequel la machine électrique et le circuit de commande de l'invention sont montés ;
- un moyen de lissage des variations de couple demandé au groupe motopropulseur du véhicule sur lequel la machine électrique et le circuit de commande de l'invention sont montés ;
- un moyen pour adapter le courant dans les phases de la machine électrique en fonction d'au moins l'état de charge de la batterie du véhicule, du niveau d'énergie thermique et de tout autre paramètre de mesure de l'environnement du véhicule.

29. Circuit selon l'une quelconque des revendications précédentes, **caractérisé en ce que** le circuit (15) générateur de forme d'ondes produit une forme d'onde en dents de scie (Figure 4, (a) et (b)), en triangle (Figure 3, (c) et (d)) ou trapézoïdale (Figure 3, (€ et (f)) ou encore avec un contrôle vectoriel de type FOC, ou **en ce que** la forme d'onde est combinée avec un moyen pour produire un effet d'hystérésis sur les fronts d'ondes.

**30.** Machine électrique pour véhicule, pouvant fonctionner comme démarreur, moteur électrique d'entraînement, moteur électrique de renfort, alternateur ou alternateur de récupération d'énergie mécanique de freinage et adaptée à fonctionner avec un circuit de commande selon l'une quelconque des revendications précédentes, **caractérisée en ce qu'**elle comporte un stator bobiné dont le nombre de spires est calculé sur la base d'une énergie de magnétisation plus faible et **en ce que** pour les modes de fonctionnement demandant une énergie de magnétisation plus élevée, on applique un contrôle en courant au moyen du circuit de commande.

**Claims**

**1.** Pulse width modulation control circuit PWM for a multi-mode rotary electrical machine (1) which is equipped with a polyphase stator (2) and a coiled rotor (3), comprising:

- a reversible alternating-direct current converter circuit (4) which is connected between two direct supply terminals (29P, 29N), and is provided with controlled terminals (23 - 25), each controlled terminal (23 - 25) being designed to be connected to at least one phase of the stator (2) of the said machine (1);
- a plurality of sensors (6, 7) which are designed to measure the current and/or the voltage in each phase of the said machine (1);
- a means (9, 10) for producing instantaneous information concerning the position and speed of rotation of the rotor (3) of the said machine (1); and
- a circuit (14) to control branches of the alternating-direct current converter circuit (4) according to electric measurements in the phases, and the position and speed of the rotor;
- **characterised in that** it also comprises a circuit (11) which produces firstly a signal to command switching via a line (28) which is destined for a chopper circuit (5) which is connected to the excitation of the rotor (3), and secondly a plurality of reference signals which are destined for a circuit (13) which generates control signals which are destined for the supply bridge (4) of the stator (2) of the electrical machine (1), according to the required functioning mode of the rotary electrical machine, taken from amongst the functioning modes such as starter, electric drive motor, electric booster motor, alternator, or alternator for recuperation of mechanical braking energy.

**2.** Circuit according to claim 1, **characterised in that** the circuit (10) for detection of rotation produces a first signal (θ) which is representative of the instantaneous angle of rotation of the rotor relative to a reference position, and a second signal (ω) which is representative of the angular speed of rotation of the rotor.

**3.** Circuit according to claim 1 or 2, **characterised in that** it also comprises a circuit (15) which generates a base wave which is connected to an input terminal of the circuit (13) which generates control signals.

**4.** Circuit according to claim 3, **characterised in that** the base wave is constituted by a wave with a triangular form, which has a first, ascending front at a first speed, and a second, descending front at a second speed.

**5.** Circuit according to claim 4, **characterised in that** the circuit (13) which generates control signals produces a plurality of control signals (C1, C2 and C3) which are connected to inputs of an adaptation circuit (14), in order to produce signals (P1 to P6) for conduction of the gates of the different semiconductor switches of the bridge (4).

**6.** Circuit according to claim 5, **characterised in that** the circuit (13) comprises for at least some of the phases of the stator a subtractor (31, 34), a first, positive input terminal of which is connected to the input terminal of one of the said reference signals (S1, S2), and a second, negative input terminal of which is connected to the input terminal of one of the said measurement signals (M1, M2), and the output terminal of which is connected to an input terminal of a correction circuit (32, 35) which applies a correction function F1() or F2() which is presented at the output of the correction circuit (32) in the form:

$$A1 = F1(S1 - M1).$$

**7.** Circuit according to claim 6, **characterised in that** the output signal (A1) which is obtained from the correction circuit (35) is applied to a first input terminal of a comparator (33, 36), a second comparison input terminal of which is connected to the output of the circuit (15) which generates the control signal, and makes it possible to change the state of conduction of the switch commanded (16, 17), to the gate electrode of which the output terminal of the comparator (33, 36) is connected.

**8.** Circuit according to claim 6, **characterised in that** the output terminals of the two correction circuits (32, 35) are also connected to respective input terminals of an adder (37), the output terminal of which is applied to a first input terminal of a comparator (38), a second comparison input terminal of which is connected to the output of the circuit (15) which generates the control signal, and **in that** the output terminal of the comparator (38) provides a signal in order to change the state of conduction of the switch commanded (18), to the gate electrode of which the output terminal of the comparator (38) is connected.

9. Circuit according to any one of the preceding claims, **characterised in that** it co-operates with a means for detection of a functioning mode, such as a means for decoding a command applied to the electrical machine in an on-board computer which decides on the functioning, from one out of the following modes:

- a functioning mode as a starter for the thermal engine:
- a functioning mode as an alternator, in order to recharge the electric battery which is connected to the on-board network for supply of direct voltage;
- a functioning mode as a drive motor, which works directly on the wheels of the vehicle, or indirectly by combining its mechanical power supplied with the mechanical power supplied by the remainder of the power unit; and
- a functioning mode as a generator which works by recuperating the braking energy required by the power unit.

10. Circuit according to any one of the preceding claims, **characterised in that**, in one of the motor modes, in order to increase the moment available at the rotor, it comprises a means for increasing the current in the stator, for a determined number ns of turns of the stator coils, and a means for reinforcing the current in the stator, when the speed of rotation of the rotor is high.

11. Circuit according to any one of the preceding claims, **characterised in that**, in one of the modes of functioning as an alternator:

(a) in order to be able to supply a current to the network, by creating an electromotive force e which is greater than the voltage of the battery for low speeds, up to a speed which is sufficient to go into diode rectifier mode;
(b) beyond a determined speed of rotation,

it comprises a means for limiting the current demanded from the battery.

12. Circuit according to any one of the preceding claims, **characterised in that** the circuit (11) which generates reference signals comprises a programme for its functioning in motor mode , according to two zones (zone A and zone B) determined by a limit

speed ($\Omega$L).

13. Circuit according to claim 12, **characterised in that**, in starter mode DEM, it comprises a means for determination of a pulse width modulation which has a constant output moment for a speed of rotation W which varies from zero speed to a limit speed, and then decreases at constant power to a maximum speed.

14. Circuit according to claim 12, **characterised in that**, in assistance mode ASS, it comprises a means for determination of a pulse width modulation which has an output moment which decreases linearly, starting from a determined separation speed ($\Omega$L) between zones (A and B) and which advantageously corresponds to idling of the thermal engine, to approximately 7,000 rpm.

15. Circuit according to claim 12, **characterised in that**, when the machine begins to function in motor mode, it comprises an additional circuit (53) in order to detect when the voltage which is generated by the battery (50) is higher than half a nominal value U0 of functioning of the battery (50) with a predetermined guard voltage $\Delta$U.

16. Circuit according to any one of the preceding claims, **characterised in that** the means for production of reference signals for the control of the stator also comprises a means for receipt of a load configuration command, which can be supplied by a control computer of the power unit and/or of the vehicle as a whole, in order to determine whether the machine must work with a full load or a reduced load.

17. Circuit according to any one of the preceding claims, **characterised in that** the means for production of the reference signals for the control of the stator also comprises a means for placing the control circuit 13 in a state such that the bridge 4 produces a sinusoidal wave which has a phase advance with an angle of between 90 and 180° in alternator mode.

18. Circuit according to any one of the preceding claims, **characterised in that**, in alternator mode, it comprises a means for determination, by a means for registration of a limit value $\Omega$D of the speed of rotation of the rotor, of two speed functioning zones, i.e. a zone C for the speeds which are lower than the limit speed S2D, and a zone D for the speeds which are higher than $\Omega$D, the limit speed being determined by the common speed when the machine is working in pulse width modulation (part of curve 60), and when it is working in passive rectification mode with intrinsic diodes only (part of curve 62).

19. Circuit according to any one of the preceding claims, **characterised in that**, in alternator mode, it comprises a means for making the conversion circuit work either at a pulse width modulation speed for speeds lower than ΩD, or only with rectification by diodes for speeds which are higher than ΩD.

20. Circuit according to any one of the preceding claims, **characterised in that** the means (11) for generation of the reference signals (S1 and S2) for control of the stator and/or the command signal (If) of the rotor current comprises a circuit (27) which comprises a data memory which has a means for generation of data sequences according to an argument based on the instantaneous speed of rotation of the rotor and on the functioning mode selected for the electrical machine.

21. Circuit according to claim 20, **characterised in that** the circuit (27) with a memory is programmed according to the transforms of Clarke and Park in order to determine the triplet of parameters {ls, IR, Ψ} which describes the electric state of the stator and of the rotor at different rotary points of reference, with the instantaneous speed of rotation of the rotor produced by the corresponding output terminal of the circuit (10).

22. Circuit according to claim 21, **characterised in that** the signals which are representative of the current at the stator and of the electric angle (ls and Ψ) are transmitted to two first input gates of a circuit (26), a third gate of which is connected to the corresponding output of the circuit 10 which produces a signal which is representative of the instantaneous angle of rotation of the rotor (θ), and **in that** the circuit (26) comprises a means for production of a plurality of reference signals (S1, S2, ...), in order to determine the pulse width modulation by means of the cutting wave produced by the circuit 15.

23. Circuit according to claim 22, **characterised in that** the circuit (26) for production of the reference signals comprises means for generation of the reference signals according to the common ratio defined by:

$$Si = Si(ls, \Psi, lR)$$

where Si() is a predetermined function.

24. Circuit according to claim 22, **characterised in that** the circuit (26) for production of the reference signals comprises means produced in the form of a programme which is executed by a signal processing circuit of the DSP type (Digital Signal Processing of the Harvard type).

25. Circuit according to claim 22, **characterised in that** the circuit (26) for production of the reference signals comprises means for generation of the common reference signal Si() by a sequencer, which, according to the triplet of arguments (lS, Ψ, lR) addresses a table of numerical values which represent cartography which is determined in advance during the charging of the control circuit.

26. Circuit according to any one of the preceding claims, **characterised in that** the electrical machine can be a machine with a rotor with claws of the Lundell type, with projecting poles, a machine with permanent magnets on the rotor, an induction or variable reluctance machine, a machine with claws with interpolar magnets, or a hybrid rotor machine made of laminated metal plates and with smooth poles with an excitation winding and permanent magnets.

27. Circuit according to any one of the preceding claims, **characterised in that** it comprises means for commanding the electrical machine in the entire range of speeds of rotation of the rotor.

28. Circuit according to any one of the preceding claims, **characterised in that** it co-operates separately or in combination with:

   - a means to prevent the thermal engine from stalling;
   - a means for regulation of the speed of the vehicle in the starting mode;
   - a means for regulation of the electric power available in the on-board network of the vehicle in which the electrical machine and the control circuit according to the invention are fitted;
   - a means for regulation of the mechanical power of the power unit in which the electrical machine and the control circuit according to the invention are fitted;
   - a means for smoothing out divergences in deceleration and stoppage of the vehicle in which the electrical machine and the control circuit according to the invention are fitted;
   - a means for smoothing out variations of moment required from the power unit of the vehicle in which the electrical machine and the control circuit according to the invention are fitted; and
   - a means for adapting the current in the phases of the electrical machine according to at least the state of charging of the vehicle battery, the thermal energy level, and any other parameter of measurement of the environment of the vehicle.

29. Circuit according to any one of the preceding claims, **characterised in that** the wave form generator circuit (15) produces a wave in saw tooth (Figure 4, (a) and (b)), triangular (Figure 3, (c) and (d)) or trapezoidal (Figure 3, (e) and (f)) form, or with vector control of FOC type, or **in that** the wave form is combined with a means for production of a hysteresis effect on the wave fronts.

30. Electrical machine for a vehicle, which can function as a starter, electric drive motor, electric booster motor, alternator, or alternator for recuperation of mechanical braking energy, and can function with a control circuit according to any one of the preceding claims, **characterised in that** it comprises a coiled stator, the number of turns of which is calculated on the basis of lower magnetisation energy, and **in that**, for the functioning modes which require higher magnetisation energy, current control is applied by means of the control circuit.

**Patentansprüche**

1. Steuerschaltung mit Pulsweitenmodulation PWM für eine in mehreren Betriebsarten verwendbare drehende elektrische Maschine (1), die mit einem mehrphasigen Stator (2) und einem bewickelten Rotor (3) ausgerüstet ist, umfassend

- eine umschaltbare AC/DC-Wandlerschaltung (4), die zwischen zwei Gleichstrom-Anschlussklemmen (29P, 29N) angeschlossen ist und gesteuerte Anschlüsse (23 - 25) umfasst, wobei jeder gesteuerte Anschluss (23 - 25) für den Anschluss an mindestens eine Phase des Stators (2) der besagten Maschine (1) bestimmt ist,
- eine Mehrzahl an Gebern (6, 7) zum Messen des Stroms und/oder der Spannung in jeder Phase der besagten Maschine (1),
- ein Mittel (9, 10) zum Erzeugen einer momentanen Information über die Position und die Drehzahl des Rotors (3) der besagten Maschine (1),
- eine Schaltung (14) zum Ansteuern der Zweige der AC/DC-Wandlerschaltung (4) in Abhängigkeit von den elektrischen Messungen in den Phasen und von der Position und der Drehzahl des Rotors,

**dadurch gekennzeichnet, dass** sie auch eine Schaltung (11) umfasst, die in Abhängigkeit von der gewünschten Betriebsart der drehenden elektrischen Maschine, wie Betrieb als Anlasser, als elektrischer Antriebsmotor, als elektrischer Zusatzmotor, als Lichtmaschine oder als Generator zur Bremsenergierückgewinnung, einerseits ein Schaltsteuersignal über eine Leitung (28) an eine Zerhackerschaltung (5) erzeugt, die an die Erregung des Rotors (3) angeschlossen ist, und andererseits eine Mehrzahl an Referenzsignalen an eine Schaltung (13) zum Erzeugen von Ansteuersignalen an die Speisebrücke (4) des Stators (2) der elektrischen Maschine (1) erzeugt.

2. Schaltung nach Anspruch 1, **dadurch gekennzeichnet, dass** die Schaltung (10) zur Erkennung der Rotation ein erstes Signal (θ) erzeugt, das repräsentativ ist für den momentanen Rotationswinkel des Rotors bezogen auf eine Bezugsposition, und ein zweites Signal (ω), das repräsentativ ist für die Winkelgeschwindigkeit der Rotation des Rotors.

3. Schaltung nach Anspruch 1 oder 2, **dadurch gekennzeichnet, dass** sie auch eine Schaltung (15) zum Erzeugen einer Basiswelle umfasst, die an eine Eingangsklemme der Schaltung (13) zum Erzeugen von Ansteuersignalen angeschlossen ist.

4. Schaltung nach Anspruch 3, **dadurch gekennzeichnet, dass** die Basiswelle aus einer dreiecksförmigen Welle besteht, die eine erste aufsteigende Front bei einer ersten Drehzahl und eine zweite abfallende Front bei einer zweiten Drehzahl aufweist.

5. Schaltung nach Anspruch 4, **dadurch gekennzeichnet, dass** die Schaltung (13) zum Erzeugen von Ansteuersignalen eine Mehrzahl an Ansteuersignalen (C1, C2 und C3) erzeugt, die an die Eingänge einer Anpassungsschaltung (14) angeschlossen sind, um Signale zum Durchschalten (P1 bis P6) der Gates der verschiedenen Halbleiterschalter der Brücke (4) zu erzeugen.

6. Schaltung nach Anspruch 5, **dadurch gekennzeichnet, dass** die Schaltung (13) für mindestens einen Teil der Phasen des Stators einen Subtrahierer (31, 34) umfasst, mit einer ersten positiven Eingangsklemme, die an die Eingangsklemme eines der besagten Referenzsignale (S1, S2) angeschlossen ist, und mit einer zweiten negativen Eingangsklemme, die an die Eingangsklemme eines der besagten Messsignale (M1, M2) angeschlossen ist, und mit einer Ausgangsklemme, die an eine Eingangsklemme einer Korrekturschaltung (32, 35) angeschlossen ist, die eine Korrekturfunktion F1() oder F2() anwendet, die am Ausgang der Korrekturschaltung (32) in der folgenden Form dargestellt wird:

$$A1 = F1(S1 - M1).$$

7. Schaltung nach Anspruch 6, **dadurch gekennzeichnet, dass** das Ausgangssignal (A1) der Korrekturschaltung (35) an einer ersten Eingangsklemme eines Komparators (33, 36) anliegt, der mit einer zweiten Vergleichseingangsklemme mit dem Ausgang der Schaltung (15) zum Erzeugen des Ansteuersignals verbunden ist, und der den Wechsel des Leitungszustands des gesteuerten Schalters (16, 17) erlaubt, an dessen Gate-Elektrode die Ausgangsklemme des Komparators (33, 36) angeschlossen ist.

**8.** Schaltung nach Anspruch 6, **dadurch gekennzeichnet, dass** die Ausgangsklemmen der beiden Korrekturschaltungen (32, 35) auch an die entsprechenden Eingangsklemmen eines Summierers (37) angeschlossen sind, dessen Ausgangsklemme an eine erste Eingangsklemme eines Komparators (38) angelegt ist, dessen zweite Vergleichseingangsklemme an den Ausgang der Schaltung (15) zum Erzeugen des Ansteuersignals angeschlossen ist, **und dass** die Ausgangsklemme des Komparators (38) ein Signal für den Wechsel des Leitungszustands des gesteuerten Schalters (18) liefert, an dessen Gate-Elektrode die Ausgangsklemme des Komparators (38) angeschlossen ist.

**9.** Schaltung nach einem der vorhergehenden Ansprüche, **dadurch gekennzeichnet, dass** sie mit einem Mittel zur Erkennung einer Betriebsart zusammenwirkt, wie einem Mittel zum Dekodieren einer auf die elektrische Maschine angewandten Steuerung an einen Bordcomputer, der über die Betriebsart entscheidet, wie

- Betrieb als Anlasser des Verbrennungsmotors,
- Betrieb als Lichtmaschine zum Aufladen der elektrischen Batterie, die an das Bordnetz zur Gleichspannungsversorgung angeschlossen ist,
- Betrieb als Antriebsmotor, der direkt auf die Räder des Fahrzeugs wirkt oder der durch Mischung seiner gelieferten mechanischen Leistung mit der vom restlichen Antriebsstrang gelieferten mechanischen Leistung indirekt wirkt,
- Betrieb als Generator mit Rückgewinnung der vom Antriebsstrang angeforderten Bremsenergie.

**10.** Schaltung nach einem der vorergehenden Ansprüche, **dadurch gekennzeichnet, dass** sie, in einer der Betriebsarten als Rotor, um das am Rotor verfügbare Drehmoment zu erhöhen, ein Mittel zum Erhöhen des Stroms im Stator bei einer bestimmten Anzahl ns der Umdrehungen der Spulen am Stator und ein Mittel zum Verstärken des Stroms im Stator bei hoher Rotordrehzahl umfasst.

**11.** Schaltung nach einem der vorhergehenden Ansprüche, **dadurch gekennzeichnet, dass** sie, in einer der Betriebsarten als Lichtmaschine,

(a) um einen Strom an das Netz abgeben zu können, indem eine elektromotorischen Kraft e erzeugt wird, die höher ist, als die Spannung der Batterie bei niedrigen Drehzahlen bis zu einer Drehzahl, die für den Wechsel in den Betrieb mit Diodengleichrichtung ausreicht,
(b) bei Überschreitung einer bestimmten Drehzahl,

ein Mittel zum Begrenzen des von der Batterie angeforderten Stroms umfasst.

**12.** Schaltung nach einem der vorhergehenden Ansprüche, **dadurch gekennzeichnet, dass** die Schaltung (11) zum Erzeugen von Referenzsignalen ein Programm für ihren Betrieb in der Motorbetriebsart gemäß zwei Bereichen (Bereich A und Bereich B) umfasst, die durch eine Grenzdrehzahl ($\Omega L$) bestimmt sind.

**13.** Schaltung nach Anspruch 12, **dadurch gekennzeichnet, dass** sie im Anlasserbetrieb DEM ein Mittel zum Bestimmen einer Pulsweitenmodulation umfasst, die bei einer Drehzahl W, die zwischen der Drehzahl Null und der Grenzdrehzahl variiert, ein konstantes Ausgangsdrehmoment aufweist und die außerdem einen Abfall bei konstanter Leistung bis zu einer maximalen Drehzahl aufweist.

**14.** Schaltung nach Anspruch 12, **dadurch gekennzeichnet, dass** sie im Hilfsbetrieb ASS ein Mittel zum Bestimmen einer Pulsweitenmodulation umfasst, die ein Ausgangsdrehmoment aufweist, das linear abfällt ab einer bestimmten Drehzahl ($\Omega L$) zur Trennung zwischen den Bereichen (A und B), die vorteilhafterweise dem Leerlauf des Verbrennungsmotors entspricht, bis zu etwa 7000 Umdrehungen pro Minute.

**15.** Schaltung nach Anspruch 12, **dadurch gekennzeichnet, dass** sie, wenn die Maschine beginnt, im Motorbetrieb zu arbeiten, eine Zusatzschaltung (53) umfasst, um zu erkennen, wenn die von der Batterie (50) erzeugte Spannung höher ist als die Hälfte eines Betriebsnennwerts U0 der Batterie (50) mit einer vorgegebenen Schutzspannung $\Delta U$.

**16.** Schaltung nach einem der vorhergehenden Ansprüche, **dadurch gekennzeichnet, dass** das Mittel zum Erzeugen von Referenzsignalen zur Kontrolle des Stators auch ein Mittel zum Empfangen eines Lastkonfigurationsbefehls umfasst, der von einem Rechner zur Überwachung des Antriebsstrangs und/ oder des kompletten Fahrzeugs geliefert werden kann, um zu bestimmen, ob die Maschine unter Volllast oder unter Schwachlast arbeiten muss.

**17.** Schaltung nach einem der vorhergehenden Ansprüche, **dadurch gekennzeichnet, dass** das Mittel zum Erzeugen von Referenzsignalen zur Kontrolle des Stators auch ein Mittel zum Schalten der Steuerschaltung 13 in einen Zustand umfasst, in dem die Brücke 4 eine sinusförmige Welle erzeugt, die eine Phasenvoreilung um einen Winkel zwischen 90 und 180° im Lichtmaschinenbetrieb aufweist.

18. Schaltung nach einem der vorhergehenden Ansprüche, **dadurch gekennzeichnet, dass** sie im Lichtmaschinenbetrieb ein Mittel umfasst, um mit einem Mittel zum Aufzeichnen eines Grenzwerts ΩD der Drehzahl des Rotors zwei Drehzahl-Betriebsbereiche zu bestimmen: einen Bereich C für Drehzahlen unter der Grenzdrehzahl ΩD und einen Bereich D für Drehzahlen über ΩD, wobei die Grenzdrehzahl durch den gemeinsamen Drehzahlbereich bestimmt wird, wenn die Maschine mit Pulsweitenmodulation arbeitet (Kurventeil 60) und wenn sie nur mit passiver Gleichrichtung durch eigenleitende Dioden arbeitet (Kurventeil 62).

19. Schaltung nach einem der vorhergehenden Ansprüche, **dadurch gekennzeichnet, dass** sie im Lichtmaschinenbetrieb ein Mittel umfasst, um die Wandlerschaltung entweder im Betrieb mit Pulsweitenmodulation arbeiten zu lassen, bei Drehzahlen unter ΩD, oder nur mit Gleichrichtung durch Dioden, bei Drehzahlen über ΩD.

20. Schaltung nach einem der vorhergehenden Ansprüche, **dadurch gekennzeichnet, dass** das Mittel (11) zum Erzeugen der Referenzsignale (S1 und S2) zur Kontrolle des Stators und/oder des Steuersignals (If) des Rotorstroms eine Schaltung (27) umfasst, die einen Datenspeicher umfasst, der mit einem Mittel zum Erzeugen von Datensequenzen in Abhängigkeit von einem Argument ausgestattet ist, das auf der momentanen Drehzahl des Rotors und der ausgewählten Betriebsart der elektrischen Maschine basiert.

21. Schaltung nach Anspruch 20, **dadurch gekennzeichnet, dass** die Schaltung (27) mit Speicher nach der Clarke- und der Park-Transformation programmiert ist, um das Parametertripel {Is, IR, Ψ} zu bestimmen, das den elektrischen Zustand des Stators und des Rotors in verschiedenen Bezugspunkten beschreibt, die mit der momentanen Drehzahl des Rotors rotieren, die von der entsprechenden Ausgangsklemme der Schaltung (10) generiert wird.

22. Schaltung nach Anspruch 21, **dadurch gekennzeichnet, dass** die Signale, die für den Strom am Stator und den elektrischen Winkel (Is und ψ) repräsentativ sind, an zwei erste Eingangstore einer Schaltung (26) übertragen werden, deren drittes Tor an den entsprechenden Ausgang der Schaltung 10 angeschlossen ist, die ein Signal generiert, das für den momentanen Rotationswinkel (θ) des Rotors repräsentativ ist, **und dass** die Schaltung (26) ein Mittel zum Erzeugen einer Mehrzahl von Referenzsignalen (S1, S2, ...) umfasst, um die Pulsweitenmodulation mit Hilfe der von der Schaltung 15 erzeugten Zerhackerwelle zu bestimmen.

23. Schaltung nach Anspruch 22, **dadurch gekennzeichnet, dass** die Schaltung (26) zum Erzeugen von Referenzsignalen Mittel zum Erzeugen von Referenzsignalen nach der gängigen Gleichung umfasst, die definiert ist durch:

$$Si = Si(Is, \psi, IR)$$

wobei Si() eine vorgegebene Funktion ist.

24. Schaltung nach Anspruch 22, **dadurch gekennzeichnet, dass** die Schaltung (26) zum Erzeugen von Referenzsignalen Mittel in Form eines Programms umfasst, das von einer Signalverarbeitungsschaltung des Typs DSP (Digital Signal Processing, Typ Harvard) ausgeführt wird.

25. Schaltung nach Anspruch 22, **dadurch gekennzeichnet, dass** die Schaltung (26) zum Erzeugen von Referenzsignalen Mittel zum Erzeugen des Stromreferenzsignals Si() durch einen Sequenzer umfasst, der in Abhängigkeit von dem Argumentetripel (Is, ψ, IR) eine Digitalwertetabelle adressiert, die eine Kartographie darstellt, die beim Laden der Steuerschaltung im Voraus bestimmt wird.

26. Schaltung nach einem der vorhergehenden Ansprüche, **dadurch gekenntzeichnet, dass** die elektrische Maschine eine Maschine mit Klauenpolrotor des Lundell-Typs, eine Einzelpolmaschine, eine Maschine mit Permanentmagneten im Rotor, eine Induktionsmaschine oder eine Maschine mit variabler Reluktanz, eine Klauenpolmaschine mit zwischenliegenden Magneten oder eine Maschine mit Hybridrotor aus geblättertem Eisen und mit glatten Polen, mit Erregerspule und Permanentmagneten sein kann.

27. Schaltung nach einem der vorhergehenden Ansprüche, **dadurch gekennzeichnet, dass** sie Mittel zum Steuern der elektrischen Maschine im gesamten Drehzahlbereich des Rotors umfasst.

28. Schaltung nach einem der vorhergehenden Ansprüche, **dadurch gekennzeichnet, dass** sie, einzeln oder in Kombination, zusammenwirkt mit

- einem Mittel zum Verhindern des Abwürgens des Verbrennungsmotors,
- einem Mittel zur Regulierung der Fahrzeuggeschwindigkeit im Anlassbetrieb,

- einem Mittel zum Regulieren der verfügbaren elektrischen Leistung in dem Bordnetz des Fahrzeugs, in das die elektrische Maschine und die Steuerschaltung der Erfindung eingebaut sind,

- einem Mittel zum Regulieren der mechanischen Leistung des Antriebsstrangs des Fahrzeugs, in das die elektrische Maschine und die Steuerschaltung der Erfindung eingebaut sind,

- einem Mittel zum Glätten der Abweichungen bei Verzögerung und Stopp des Fahrzeugs, in das die elektrische Maschine und die Steuerschaltung der Erfindung eingebaut sind,

- einem Mittel zum Glätten der Schwankungen des Drehmoments, das von dem Antriebsstrang des Fahrzeugs angefordert wird, in das die elektrische Maschine und die Steuerschaltung der Erfindung eingebaut sind,

- einem Mittel zum Anpassen des Stroms in den Phasen der elektrischen Maschine in Abhängigkeit von mindestens einem Ladezustand der Batterie, vom Wärmeenergieniveau und von allen sonstigen Messparametern der Fahrzeugumgebung.

29. Schaltung nach einem der vorhergehenden Ansprüche, **dadurch gekennzeichnet, dass** die Schaltung (15) zur Wellenformerzeugung eine Sägezahn-Wellenform (Figur 4 (a) und (b)), eine Dreiecks-Wellenform (Figur 3 (c) und (d)) oder eine Trapez-Wellenform (Figur 3 (€ und (f)) erzeugt, oder auch mit einer Vektorsteuerung des Typs FOC, oder **dass** die Wellenform mit einem Mittel zum Erzeugen eines Hysterese-Effekts auf die Weillenfronten kombiniert ist.

30. Elektrische Maschine für ein Fahrzeug, die als Anlasser, als elektrischer Antriebsmotor, als elektrischer Zusatzmotor, als Lichtmaschine oder als Generator zur Bremsenergierückgewinnung arbeiten kann und für den Betrieb mit einer Steuerschaltung nach einem der vorhergehenden Ansprüche geeignet ist, **dadurch gekenntzeichnet, dass** sie einen bewickelten Stator mit einer Wicklungszahl umfasst, die auf der Grundlage einer geringeren Magnetisierungsenergie berechnet ist, und **dass** bei Betriebsarten, die eine höhere Magnetisierungsenergie erfordern, eine Stromregelung mittels der Steuerschaltung angewandt wird.

**Fig. 1**

**Fig. 2**

Fig. 3

Fig. 3

Fig. 4

**Fig. 5**

**Fig. 6**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 1219493 A
- US 20020007975 A
- FR 2745445 A